# EUROPEAN PATENT SPECIFICATION

(11) **EP 1 195 444 B1**
(45) Date of publication and mention of the grant of the patent: **03.12.2008**
(21) Application number: 01121445.9
(22) Date of filing: 07.09.2001
(51) Int. Cl.: C21C 7/00, F27D 3/00, B23D 25/14, B23D 19/06

(54) **Method for conversion of steel bands into dosable bulk material for addition in a steel production process, and means therefor**
Verfahren zur Transformation von Stahlbändern in dosierbares Schüttgut zur Beimischung für Stahlherstellungsverfahren, und Vorrichtung dazu
Procédé pour transformer des feuilles d'acier à des matériaux en vrac à fin de doser leur addition au procédé de fabrication d'acier et moyens de mise en oeuvre

(30) Priority: 08.09.2000 SE 0003188
(43) Date of publication of application: 10.04.2002
(73) Proprietor: Outokumpu, Oyj, 02200 Espoo (FI)
(72) Inventor: Lind, Sune, 774 97 Fors (SE); Lind, Kent, 774 92 Avesta (SE); Holmberg, Nils, 774 41 Avesta (SE)
(74) Representative: Fröderberg, Anders Oskar

(56) References cited:
- DE-A- 2 359 368
- DE-B- 1 019 525
- US-A- 1 556 800
- US-A- 2 327 103
- US-A- 3 602 410

## Description

### TECHNICAL FIELD

The invention refers to a method and apparatus for producing smelting base material or cooling agent material in a steel production process. More closely the invention suggests a method for conversion of steel plate or steel bands into a dosage dispensable bulk material for addition to a smelting hearth as smelting base material, or as a cooling agent material for lowering the temperature of the smelting hearth. The invention also refers to an apparatus by which arr endless steel band is continuously fed to be cut, firstly in the longitudinal direction and secondly in a transverse direction in one integrated procedural step in order to convert the band into substantially uniform steel pieces that are suitable for a controlled dosage and addition to the smelting hearth. An apparatus according to the preamble of claim 2 is known from DE 2359368.

As used herein, the expression "cooling agent material" refers to pieces of steel originating from scrap material and recovered in the steel production process for lowering the temperature of the liquid metal, such as the temperature in the liquid metal that is to be discharged from the furnace. The addition of material in order to control the temperature of the liquid metal foresees, that the composition of the added material is known and preferably is the same as the composition of the liquid metal. Consequently, the cooling material to be used preferably is refined metal that for some reason does not meet production standards, and for same reason is sorted out as scrap metal. The scrap metal may be in the form of rolled sheets having different thickness, stored is reels, e.g. As used herein, the expression "smelting base material" refers to basic material with a known composition to be fed into the furnace.

### PRIOR ART

Known methods for conversion of scrap metal into bulk material in a steel production process contemplates, that the scrap metal or sheet metal is converted into granules or spheres, added on demand to the smelting hearth from a hopper supply. This type of conversion is highly energy consuming and costly, and usually involves transporting of material in both directions from the production plant.

### OBJECT OF INVENTION

The object of this invention is to provide energy saving and low cost apparatus and methods, by which scrap metal present in the form of sheets or reeled steel strips is converted into a bulk material that is adapted for dosage and addition to the liquid metal in a steel production process.

This object is achieved in the method defined in claim 1, and in the apparatus defined in claim 2. Specific embodiments of the invention are defined in the subordinated claims.

In order to achieve the object of the invention, a technical problem to be solved is the continuous and integrated operation of cutting a relatively wide area start material into small pieces. The end product should be sized and shaped to allow a dosage dispensing via feeding out valves, oscillators, etc., without causing blockage of narrow passages or clogging in the supply of bulk material due to gravity forces acting on the material. Accordingly, the starting material such as reels of rolled sheet metal having a width of up to 600 mm or more must therefore be slit and cut for providing a bulk material having a "running" capacity.

Another technical problem is to cut the sheet metal longitudinally and transversely into operable dimensions at economic cutting rates. In order to permit an integrated operation and continuous feed for cutting a steel band transversely to the feed direction there is required a cutting procedure to be performed at sufficient high frequency, which eliminates the use of a conventional type of cutter relying on a reciprocating operation. According to the invention there is suggested a rotary cutting head having one or more cutters to be driven at a rotational speed and momentum that is sufficient for cutting by shearing of the steel pieces over a steel counter support.

### SUMMARY OF THE INVENTION

Above said problems are solved by the method and means provided in the present invention. According thereto, a method is suggested for conversion of steel bands into bulk material for dosage dispensable addition in a steel production process. The method contemplates, that the steel band is cut longitudinally into narrow strips having a typical width of about 20 to 50 mm, such as by a slitting device with rotary cutters. The strips are fed and guided in parallel paths from the slitting device for simultaneously cutting all strips into uniformly shaped steel pieces over a common counter support. Slitting, feeding and cutting operations are synchronized for producing uniform, four sided and preferably quadrangular steel pieces adapted for addition to the steel production process as cooling agent material and/or as smelting base material.

An assembly for operating the method is further advised, wherein the steel strips that are forwarded in parallel paths are simultaneously cut into uniform steel pieces. The assembly comprises a counter support onto which the strips are fed in parallel paths to be cut into uniform, preferably quadrangular steel pieces that fall from the counter support to be received on a belt conveyor for feeding the steel pieces out from the assembly. In a preferred embodiment the assembly also comprises two cutter heads or disks driven for rotation in mutually opposite directions, each cutter head carrying at least one cutter that has a radial orientation relative to the cutter head, and which is effective in cooperation with the counter support for simultaneously cutting all steel strips transversely to the feed direction of the strips. The cutter heads are driven for synchronized rotation by means of a common drive, and means for feeding and guiding the strips are driven in synchronization with the cutter heads. A slitting device is incorporated upstream the cutters and driven in synchronization with the cutter heads, such as by frequency controlled electrical drives for the slitting device and the cutters.

### DRAWINGS

Examples and advantageous embodiments of the invention is more closely described with reference made to the drawings, wherein
Fig. 1 is a diagrammatic plan view from above showing an assembly for operating the invention;
Fig. 2 is a diagrammatic side view showing the cutter assembly of the invention;
Fig. 3 is an end view in the feeding direction of the assembly, and
Fig. 4 is a partial section view showing a cutter head of the assembly.

### DETAILED DESCRIPTION OF THE INVENTION

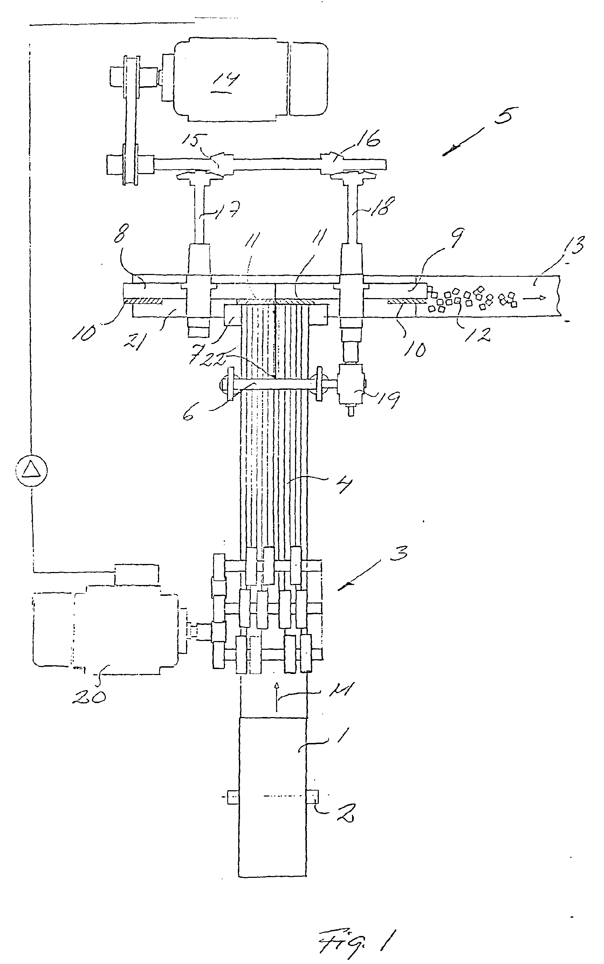

With reference to fig. 1, an assembly for operating the inventive method is diagrammatically illustrated.

A band of steel 1 is winded to a reel that is journalled for rotation about an axis 2. The steel band 1 is driven through a slitting device 3 for slitting the band into strips 4 having substantially the same widths. The strips are driven towards an assembly 5 to be fed over a counter support 7 via a feeding control means 6. In a preferred embodiment, two disks or cutter heads 8,9 are arranged for rotation in mutually opposite directions, each cutter head carrying a couple of cutters 10,11 on the side M of the cutter head that is facing the feed direction. The cutters 10,11 are arranged to operate in pairs and oriented for simultaneously cutting all strips 4 over the counter support 7. The cut steel pieces 12 are ejected to be received on belt conveyor 13 for feeding out the pieces from the assembly 5. The slitting device, the feeding control means and the rotary cutter heads are driven in synchronization such that the feed rate of the steel strips is adjusted relative to the rotational speed of the cutter heads in order to produce rectangular, preferably quadrangular steel pieces 12 in the process of converting the steel band into bulk material through slitting and cutting the steel band in an integrated and continuously operated process.

The assembly 5 comprises a drive means 14, such as an electric motor, driving the rotary cutter heads 8,9 via bevel gears 15,16. The cutter heads are supported on shafts 17,18 that are driven by the pinions for rotation at equal rotational speeds. A bevel gear 19 is arranged on one of the shafts 17,18 for operating the feed control means 6 in synchronization with the cutter heads 8,9. The feed control means 6 preferably is driven at a slightly higher feed rate in order to provide a tensioning of the steel strips that are fed out from the slitting device 3.

Slitting device 3 is associated with a drive means 20, such as an electric motor, that is controlled for driving the slitting device in synchronization with the cutter heads 8,9 and the feed control means 6. Synchronization of drive means 14 and 20 may be performed through frequency control of the power supply to the electric motors.

The cut steel pieces 12 fall via a shaft 21 from the counter support onto the belt conveyor 13. The shaft 21 comprises a labyrinth structure for reducing the velocity of the falling steel pieces before these are received on the belt conveyor. The labyrinth structure may be realized as a couple of plates, slanting in the fall direction and towards which the steel pieces will bounce and change their falling direction at least twice before they are received onto the belt conveyor.

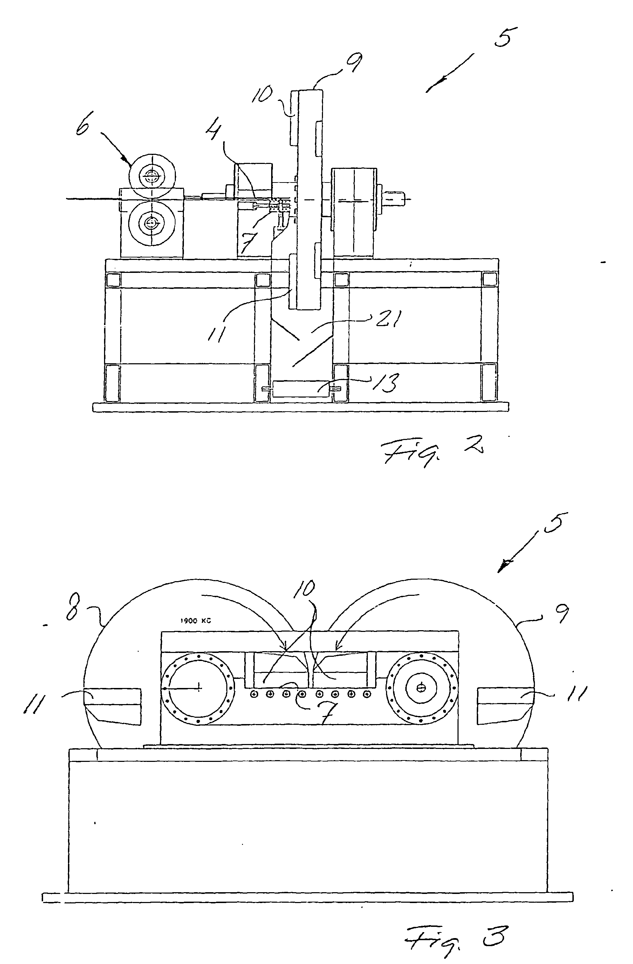

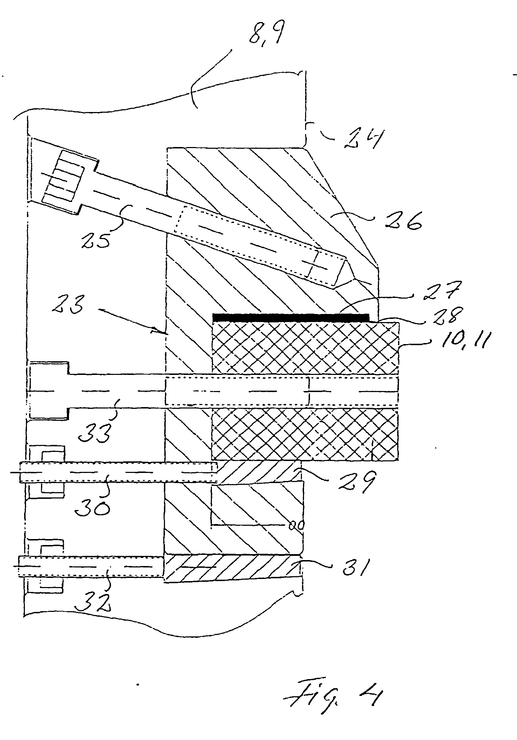

In fig. 2, the assembly 5 is shown in a side elevation view. The feed control means 6 is supported by a frame structure, not further disclosed, in a front end of the assembly as seen in the feed direction. The feed control means 6 comprises a pair of rollers, between which the slit strips 4 are controlled and driven in parallel paths towards the rotating cutter heads 8,9. In fig. 2, only the cutter head 9 is illustrated. The counter support 7 is visible through a cut away portion of the frame structure, and is here shown to include setting screws for positioning the counter support relative to the cutter heads 8,9. The shaft 21 with is visible below the cutter head, including the slanting plates that reduce the velocity of the metal pieces before they are received by the belt conveyor 13. The cutters 10,11 that are attached to the cutter head 9 are more closely described below, with reference to fig. 4.

With reference to fig. 3, the assembly 5 is shown in an elevation view showing the input end. This view specifically illustrates the cutters 10,11 operating in pairs, and oriented on a periphery area of each cutter head for simultaneously cutting all the steel strips that are fed over the counter support. As is visible in the drawing, there is an intermediate gap between the two cutters 10. Control pins or wheels 22 are arranged in front of the counter support for guidance of the steel strips towards the cutters such that the parallel steel strips are divided into two sets of steel strips before they are driven over the counter support. Further, it will be understood when viewing fig. 3 that the innermost strips will firstly be cut through, before the outermost strips are fully detached by the cutters. This can be seen as a consequence of the horizontal orientation of the counter support on a line going through the pivot centers of the cutter heads. Due to a high rotational speed of the cutter heads, the time difference is however very small so that practically all steel strips are cut simultaneously when the counter support is passed by the cutters.

The attachment of the cutters 10,11 in the disks or cutter heads 8,9 is illustrated with reference to fig. 4, the figure showing a partial section through the cutter head. A cutter fixture 23 is mounted in a recess formed in the front face 24 of the cutter head. Bolts 25 extend in a slanting orientation from the opposite side of the cutter head to engage an upper portion 26 of the cutter fixture, projecting above the front face 24. The cutter 10 or 11 is received in the cutter fixture with an intermediately disposed spacer element 27 with a capacity for distributing the load and for saving the forward edge 28 of the cutter fixture. A wedge member 29 is inserted on the lower side of the cutter, between the cutter and the cutter fixture, and a bolt 30 extends through the cutter head for exerting a pressure force on the wedge. A second wedge member 31 is inserted between the cutter fixture and the cutter head, and a pressure force being correspondingly applied to the second wedge member from a bolt 32, extending through the cutter head. A bolt 33 extends through the cutter head and engages the cutter for holding the cutter in the axial direction of the cutter head, i.e. in the feeding direction M.

Naturally, the number of cutters may be varied without departing from the teachings herein. Primarily, the object of the invention is to provide a method and apparatus that has a capacity for cutting a steel band, firstly into parallel steel strips of substantially equal widths, and secondly into smaller steel pieces of substantially equal size and shape. The process is performed by an integrated and continuous operation for conversion of the steel band into a bulk material that allows for dosage dispensing of the metal pieces from a supply of cooling material or smelting base material in a steel production process.

## Claims

1. A method for conversion of a steel band into dosage dispensable bulk material for addition to the smelting hearth in a steel production process, comprising the following steps:
- slitting the steel band into longitudinal strips;
- feeding the strips in parallel paths over a common counter support (7) that is oriented transversely to a feed direction (M);
- cutting the strips by means of two cutter dishs (8,9) driven for continuous rotation and operative for simultaneously cutting all strips over the counter support, wherein
- the slitting and feeding operations are controlled in synchronization with the rotation of the cutters for producing rectangular and preferably quadrangular steel pieces in an integrated procedure wherein the steel band is slit and cut while being under continuous feed,
- simultaneously cutting the steel strips comprises feeding the steel strips in parallel paths towards the two disks (8, 9) facing the feed direction (M) and driven for rotation in mutually opposite directions of rotation, each disk on the side thereof facing the feed direction carrying at least one cutter (10; 11) arranged in parallel with the counter support (7), the cutters cooperating with the counter support in pairs for simultaneously cutting all steel strips.

2. An apparatus for conversion of a steel band to dosage dispensable bulk material for addition to the smelting hearth in a steel production process, by which apparatus a steel band is continuously fed from a reeled supply to be divided into rectangular, preferably quadrangular steel pieces in a continuous and integrated procedure, the apparatus comprising:
- a slitting machine (3) for slitting the steel band longitudinally into strips;
- feed- and control means (6) arranged after the slitting machine in a feed direction (M), and by which the strips are fed in parallel paths over a common counter support (7) that is oriented transversely to the feed direction;
- a cutting assembles (5) for simultaneously cutting all steel strips that are fed over the counter support, and
- control means for adjusting the slitting and feeding velocities of the steep strips in synchronization with the rotational speed of the cutter,
**characterized in that** the cutting assembly (5) comprises two disks (8, 9) facing the feed direction and driven for continuous rotation in mutually opposite directions of rotation in parallel with the counter support, each disk (8, 9) carrying at least one cutter (10; 11) on the side thereof facing the feed direction, the cutters arranged in parallel with the counter support (7) and cooperating therewith in pairs.

3. The apparatus of claim 2, **characterized in that** the two disks (8, 9) each carries two cutters (10, 11) arranged in diametrically opposite positions on the face of the disk.

4. The apparatus of claim 2 or 3, **characterized by** the cutters (10; 11) having a radial orientation on the face of the disk (8; 9) and are operative for cutting the steel strips from a center of the counter support (7), towards the ends of the counter support.

5. The apparatus of any of claims 2-4, **characterized in that** a face of the counter support (7) is horizontally positioned and level with the rotational centers of the disks (8, 9).

6. The apparatus of any of claims 2-5, **characterized in that** the counter support (7) is horizontally adjustable relative to the cutters (10; 11), and vertically adjustable relative to the rotational centers of the disks (8, 9).

## Patentansprüche

1. Verfahren zur Transformation eines Stahlbandes in dosierbares Schüttgut zum Einbringen in den Schmelzherd in einem Stahlerzeugungsverfahren, umfassend die folgenden Schritte:
- Längsteilung des Stahlbands in Längsstreifen;
- Zuführung der Streifen in parallelen Bahnen über einen gemeinsamen Gegenhalter (7), der quer zu einer Vorschubrichtung (M) ausgerichtet ist;
- Schneiden der Streifen mit Hilfe von zwei Schneidscheiben (8, 9), die für eine kontinuierliche Drehung angetrieben werden und alle Streifen über dem Gegenhalter gleichzeitig schneiden, wobei
- die Arbeitsschritte der Längsteilung und der Zuführung synchron mit der Drehung der Schneidvorrichtungen gesteuert sind, um in einem integrierten Verfahren rechteckige und vorzugsweise viereckige Stahlstücke herzustellen, wobei das Stahlband bei kontinuierlichem Vorschub längsgeteilt und geschnitten wird, und
- das gleichzeitige Schneiden der Stahlstreifen, die Zuführung der Stahlstreifen in parallelen Bahnen zu den zwei Scheiben (8, 9) umfasst, die der Vorschubrichtung (M) zugewandt sind und in einander entgegengesetzte Drehrichtungen in Drehung versetzt werden, wobei jede Scheibe an ihrer Seite, die der Vorschubrichtung zugewandt ist, mindestens einen Abschneider (10; 11) trägt, der parallel zu dem Gegenhalter (7) angeordnet ist, wobei die Abschneider paarweise mit dem Gegenhalter zusammenarbeiten, um alle Stahlstreifen gleichzeitig zu schneiden.

2. Vorrichtung zur Transformation von Stahlbändern in dosierbares Schüttgut zum Einbringen in den Schmelzherd in einem Stahlerzeugungsverfahren, durch die ein Stahlband kontinuierlich von einer Stahlbandrolle zugeführt wird, um in einem kontinuierlichen und integrierten Verfahren in rechteckige, vorzugsweise viereckige Stahlstücke getrennt zu werden, wobei die Vorrichtung umfasst:
- ein Streifenschneidergerät (3) zur Längsteilung des Stahlbands in Streifen;
- Vorschub- und Steuermittel (6), die in einer Vorschubrichtung (M) hinter dem Streifenschneidergerät angeordnet sind und durch welche die Streifen in parallelen Bahnen über einen gemeinsamen Gegenhalter (7), der quer zu der Vorschubrichtung ausgerichtet ist, zugeführt werden;
- ein Schneidwerk (5) zum gleichzeitigen Schneiden aller Stahlstreifen, die über den Gegenhalter zugeführt werden, und
- Steuermittel zur Einstellung der Längsteil- und Vorschubgeschwindigkeiten der Stahlstreifen synchron mit der Drehgeschwindigkeit der Schneidvorrichtung, **dadurch gekennzeichnet, dass** das Schneidwerk (5) zwei Scheiben (8, 9) umfasst, die der Vorschubrichtung zugewandt sind und parallel zu dem Gegenhalter kontinuierlich in einander entgegengesetzte Drehrichtungen in Drehung versetzt werden, wobei jede Scheibe (8, 9) auf ihrer Seite, die der Vorschubrichtung zugewandt ist, mindestens einen Abschneider (10; 11) trägt, wobei die Abschneider parallel zu dem Gegenhalter (7) angeordnet sind und paarweise mit diesem zusammenwirken.

3. Vorrichtung nach Anspruch 2, **dadurch gekennzeichnet, dass** die beiden Scheiben (8, 9) jeweils zwei Abschneider (10, 11) tragen, die in diametrisch gegenüberliegenden Positionen an der Seite der Scheibe angeordnet sind.

4. Vorrichtung nach Anspruch 2 oder 3, **dadurch gekennzeichnet, dass** die Abschneider (10; 11) radial zur Seite der Scheibe (8; 9) ausgerichtet sind und betrieben werden, um die Stahlstreifen von einem Mittelpunkt des Gegenhalters (7) zu den Enden des Gegenhalters hin zu schneiden.

5. Vorrichtung nach einem der Ansprüche 2-4, **dadurch gekennzeichnet, dass** eine Seite des Gegenhalters (7) horizontal positioniert und auf gleicher Höhe mit den Drehzentren der Scheiben (8, 9) ist.

6. Vorrichtung nach einem der Ansprüche 2-5, **dadurch gekennzeichnet, dass** der Gegenhalter (7) horizontal zu den Abschneidern (10; 11) und vertikal zu den Drehzentren der Scheiben (8, 9) verstellbar ist.

## Revendications

1. Procédé pour convertir une feuille d'acier en un matériau en vrac pouvant être distribué par doses pour ajout dans la sole de fusion dans un processus de production d'acier, comprenant les étapes suivantes consistant à :
- fendre la feuille d'acier en bandes longitudinales ;
- avancer les bandes dans des trajets parallèles sur un contre-support (7) commun qui est orienté transversalement à une direction d'avance (M) ;
- couper les bandes au moyen de deux disques de coupe (8, 9) entraînés en une rotation continue et pouvant être utilisés pour couper simultanément toutes les bandes sur le contre-support, dans lequel
- les opérations de fente et d'avance sont commandées en synchronisation avec la rotation des éléments de coupe pour produire des pièces d'acier rectangulaires et de préférence quadrangulaires dans une procédure intégrée dans laquelle 1a feuille d'acier est fendue et coupée tout en étant avancée en continu,
- l'opération de coupe simultanée des bandes d'acier comprend l'avance des bandes d'acier dans des trajets parallèles vers les deux disques (8, 9) orientés dans la direction d'avance (M) et entraînés en rotation dans des sens de rotation mutuellement opposés, chaque disque sur son côté orienté dans la direction d'avance supportant au moins un élément de coupe (10 ; 11) agencé parallèlement au contre-support (7), les éléments de coupe coopérant avec le contre-support par paires pour couper simultanément toutes les bandes d'acier.

2. Dispositif pour convertir une feuille d'acier en un matériau en vrac pouvant être distribué par doses pour ajout dans la sole de fusion dans un processus de production d'acier, par lequel dispositif une feuille d'acier est avancée en continu d'une réserve en bobine devant être divisée en pièces d'acier rectangulaires, de préférence quadrangulaires dans une procédure continue et intégrée, le dispositif comprenant :
- une machine de fente (3) pour fendre la feuille d'acier longitudinalement en bandes ;
- des moyens d'avance et de commande (6) agencés après 1a machine de fente dans une direction d'avance (M), et par lesquels les bandes sont avancées dans des trajets parallèles sur un contre-support (7) commun qui est orienté transversalement à la direction d'avance ;
- un ensemble de coupe (5) pour couper simultanément toutes les bandes qui sont avancées sur le contre-support ; et
- des moyens de commande pour ajuster les vitesses de fente et d'avance des bandes d'acier en synchronisation avec la vitesse de rotation de l'élément de coupe, **caractérisé en ce que** l'ensemble de coupe (5) comprend deux disques (8, 9) orientés dans la direction d'avance et entraînés en rotation en continu dans des sens de rotation mutuellement opposés parallèlement au contre-support, chaque disque (8, 9) supportant au moins un élément de coupe (10 ; 11) sur son côté orienté dans la direction d'avance, les éléments de coupe étant agencés parallèlement au contre-support (7) et coopérant avec celui-ci par paires.

3. Dispositif selon la revendication 2, **caractérisé en ce que** les deux disques (8, 9) supportent chacun deux éléments de coupe (10, 11) agencés à des positions diamétralement opposées sur la face du disque.

4. Dispositif selon la revendication 2 ou 3, **caractérisé en ce que** les éléments de coupe (10 ; 11) ont une orientation radiale sur la face du disque (8 ; 9) et peuvent être utilisés pour couper les bandes d'acier d'un centre du contre-support (7) vers les extrémités du contre-support.

5. Dispositif selon l'une quelconque des revendications 2 à 4, **caractérisé en ce qu'**une face du contre-support (7) est positionnée horizontalement et au même niveau que les centres de rotation des disques (8, 9).

6. Dispositif selon l'une quelconque des revendications 2 à 5, **caractérisé en ce que** le contre-support (7) est ajustable horizontalement par rapport aux éléments de coupe (10 ; 11), et ajustable verticalement par rapport aux centres de rotation des disques (8, 9).
